(19) Europäisches Patentamt
European Patent Office
Office européen des brevets

(11) Veröffentlichungsnummer : **0 363 695 B1**

(12) **EUROPÄISCHE PATENTSCHRIFT**

(45) Veröffentlichungstag der Patentschrift :
26.08.92 Patentblatt 92/35

(51) Int. Cl.$^5$ : **G01P 5/10,** G01P 13/02,
G01F 23/22

(21) Anmeldenummer : **89117375.9**

(22) Anmeldetag : **20.09.89**

(54) **Messonde zur Erfassung niedriger Strömungsgeschwindigkeiten in einem Rohrabschnitt.**

(30) Priorität : **27.09.88 LU 87347**

(43) Veröffentlichungstag der Anmeldung :
**18.04.90 Patentblatt 90/16**

(45) Bekanntmachung des Hinweises auf die
Patenterteilung :
**26.08.92 Patentblatt 92/35**

(84) Benannte Vertragsstaaten :
**BE DE ES FR GB GR IT LU NL**

(56) Entgegenhaltungen :
**DE-A- 2 024 911
DE-A- 2 423 302
US-A- 3 465 315**

(56) Entgegenhaltungen :
**JOURNAL OF SCIENTIFIC INSTRUMENTS
(JOURNAL OF PHYSICS E), Series 2, vol. 2,
Nov. 1969 (Nr. 11), London, K.Y. CHUI ET AL
"Acombined yawmeter and velocity meter for
low-speed flow", Seiten 988-990
JOURNAL OF SCIENTIFIC INSTRUMENTS,
vol. 42 (1965.08), 8, London, G.S. HARRIS "A
cold tip velocity meter", Seite 657**

(73) Patentinhaber : **EUROPÄISCHE
ATOMGEMEINSCHAFT (EURATOM)
Bâtiment Jean Monnet Plateau du Kirchberg
L-2920 Luxembourg (LU)**

(72) Erfinder : **Chenneaux, François
via per Reno 16
I-21014 Cerro (LAV) (IT)**

(74) Vertreter : **Weinmiller, Jürgen
Lennéstrasse 9 Postfach 24
W-8133 Feldafing (DE)**

**Beschreibung**

Die Erfindung bezieht sich auf eine Meßsonde zur Erfassung niedriger Strömungsgeschwindigkeiten in einem Rohrabschnitt gemäß dem Oberbegriff des Anspruchs 1. Eine solche Meßsonde ist z.B. aus der DE-OS 24 23 302 bekannt.

Zur Strömungsmessung werden oft sogenannte Dragbodies, das sind Körper, die durch die Strömung aus ihrer Ruhelage ausgelenkt werden, oder Meßturbinen verwendet. Sind die Strömungsgeschwindigkeiten jedoch gering, dann liefern diese Sonden keine zuverlässige Anzeige mehr. Dies gilt beispielsweise in einem Wasserkreislauf bei Unterschreiten einer Strömungsgeschwindigkeit von 0,25 m/s. Wenn es nicht möglich ist, durch Verengung des Rohrquerschnitts die Strömungsgeschwindigkeit zu erhöhen, da dadurch zugleich die Druckverluste im Kreis erhöht werden, dann muß nach einer neuen Meßsonde gesucht werden.

Die Meßsonde gemäß der obengenannten Druckschrift besitzt ein Rohr, in dessen Mitte ein Heizelement angeordnet ist. Dieses heizt die Strömung im Rohr auf. Die Temperatur der Strömung an den beiden Rohrenden gibt also einen Hinweis auf die Strömungsrichtung. Demgemäß liegen zwei Thermoelemente an den Rohrenden und sind elektrisch so geschaltet, daß sie die Temperaturdifferenz messen. Die Genauigkeit der Messung dieser Sonde für niedrige Strömungsgeschwindigkeiten, die auch noch rasch schwanken können, ist aber gering. Sie dient daher im wesentlichen nur zur Ermittlung der Strömungsrichtung.

Aufgabe der Erfindung ist es daher, eine Meßsonde zur Erfassung niedriger Strömungsgeschwindigkeiten in einem Rohrabschnitt anzugeben, die einerseits bei niedrigen Strömungsgeschwindigkeiten zuverlässige Anzeigen liefert, andererseits robust ist, um hohen Geschwindigkeiten und hohen Geschwindigkeitsänderungen sowie starken Temperaturänderungen standzuhalten. Die Querschnittsversperrung des Rohrabschnitts aufgrund der Sonde soll so gering wie möglich sein und die Sonde soll eine verläßliche Anzeige sowohl in Flüssigkeiten als auch in Dämpfen und Gasen erlauben. Schließlich soll die Sonde auch negative Strömungen, d.h. eine Strömungsumkehr, erfassen können.

Diese Aufgabe wird erfindungsgemäß durch die kennzeichnenden Merkmale des Anspruchs 1 gelöst.

Die Meßsonde nutzt also die Tatsache aus, daß an dem der Strömung zugekehrten Ende des Heizelements mehr Wärme abgeführt wird als an dem stromabwärts liegenden Ende. Nicht die Aufheizung des strömenden Mediums, sondern die mit wesentlich reduzierter Verzögerung meßbare Abkühlung des Heizelements wird für die Messung ausgewertet.

In einer ersten bevorzugten Ausführungsform der Erfindung ist das Heizelement als spiralförmiger Heizleiter mit zur Strömungsrichtung paralleler Spiralachse ausgebildet. Diese Ausführungsform eignet sich besonders für horizontale Rohrabschnitte. Für vertikale Rohrabschnitte dagegen eignet sich besser eine Meßsonde, bei der als Heizelement zwei getrennt gespeiste Heizleiter verwendet werden, die parallel zueinander senkrecht zur Strömungsrichtung verlaufen, wobei der eine in Strömungsrichtung hinter dem anderen angeordnet ist. Eine solche Meßsonde eignet sich für Vertikalströmungen deshalb besser, weil die durch die Heizleiter selbst erzeugte Auftriebsströmung, die die Messung verfälschen könnte, hier deutlich geringer als bei einem spiralförmigen Heizleiter mit senkrechter Spiralachse ist.

Die erfindungsgemäße Meßsonde läßt sich mit geringem Aufwand mit einer an sich bekannten Pegelmeßsonde für den Fall eines horizontalen Rohrabschnitts verbinden, indem Thermoelemente in verschiedenen Höhenlagen an einem der beiden dann vertikal verlaufenden Heizleiter befestigt sind, wobei die gemessenen Temperaturen Auskunft über den Höhenstand der Flüssigkeit geben.

Die Erfindung wird nun anhand dreier bevorzugter Ausführungsbeispiele mithilfe der Zeichnungen näher erläutert.

Fig. 1 zeigt einen Schnitt durch eine erfindungsgemäße Meßsonde für den Einbau in einen horizontalen Rohrabschnitt.

Fig. 2 zeigt eine entsprechende Sonde, die besser für den Einbau in einen vertikalen Rohrabschnitt geeignet ist.

Fig. 3 zeigt eine kombinierte Meßsonde, die zugleich die Strömungsgeschwindigkeit als auch den Pegelstand der Flüssigkeit in einem horizontalen Rohrabschnitt erfaßt.

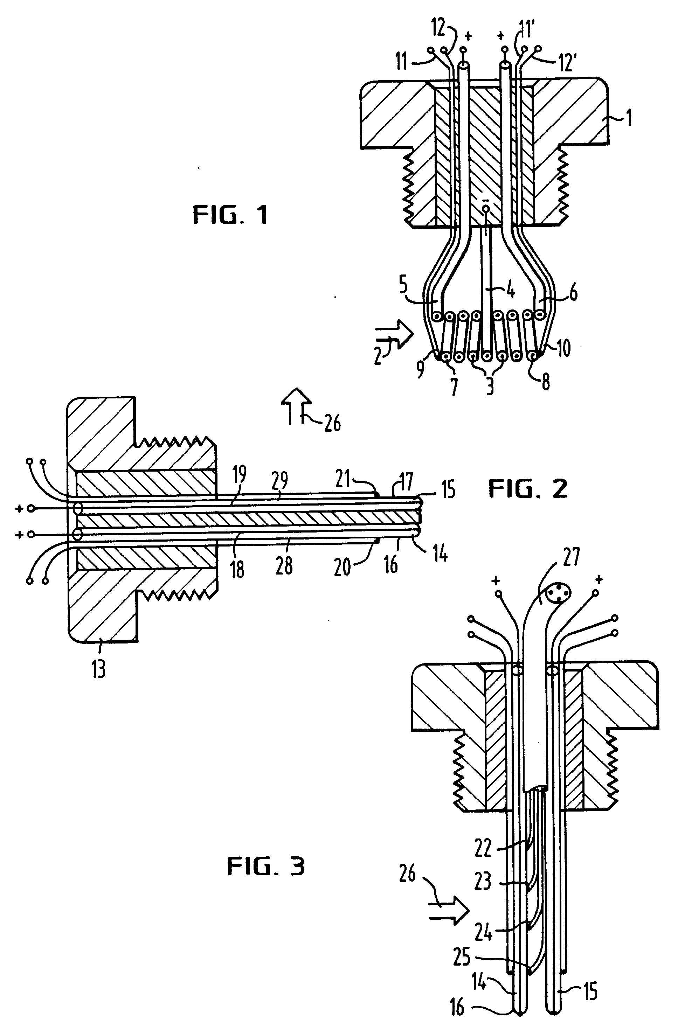

Die Sonde gemäß Fig. 1 ist an einem Stopfen 1 angebaut, der in die Wandung eines nicht dargestellten Rohrabschnitts eingeschraubt werden kann. Die Strömungsrichtung in dem Rohrabschnitt ist durch einen Pfeil 2 angedeutet. Die Strömungsgeschwindigkeit kann sehr gering und auch negativ sein. Die Sonde besteht im wesentlichen aus einer Heizspirale 3 mit Mittelabgriff 4. Die Spiralachse verläuft parallel zur Strömungsrichtung (Pfeil 2). Der Mittelabgriff 4 ist elektrisch mit dem Stopfen verbunden und liegt somit auf Masse. Die beiden Enden 5 und 6 der Spirale sind durch den Stopfen herausgeführt und werden durch je eine nicht dargestellte Gleichspannungsquelle mit einem i.w. gleichen positiven Potential versorgt. Die Heizspirale besteht beispielsweise aus einem Heizdraht, der mit einem elektrisch isolierenden, aber thermisch leitenden Mantel umgeben ist (sog. Thermokoax-Kabel). Die beiden äußersten Windungen 7 und 8 der Heizspirale sind mit je einem Ther-

2

moelement 9 und 10 verbunden. Die Anschlüsse 11-12, 11'-12' der Thermoelemente sind durch den Stopfen nach außen geführt und münden in einen (nicht dargestellten) Konstanttemperatur-Anschlußkasten. Die beiden Thermoelemente sind in Reihe geschaltet an ein nicht dargestelltes Meßgerät so angeschlossen, daß sie die Temperaturdifferenz zwischen den beiden Meßpunkten zu erfassen erlauben.

Die Meßsonde arbeitet folgendermaßen:

Die Heizung wird so eingestellt, daß die Heizspiralentemperatur etwa 200 K höher als die maximale Betriebstemperatur liegt. Solange keine Strömung vorhanden ist, werden die beiden Thermoelemente 9 und 10 in gleicher Weise erwärmt, so daß an den in Reihe geschalteten Anschlüssen dieser Thermoelemente kein Meßsignal abnehmbar ist.

Gegebenenfalls wird dieses Ergebnis erst erreicht, wenn die Speisespannungen der beiden Hälften der Heizspirale leicht voneinander abweichend eingestellt sind.

Schon bei einer niedrigen Strömungsgeschwindigkeit von 0,01 m/s ergibt sich ein eindeutiges Meßsignal, da an dem der Strömung zugekehrten Thermoelement 9 mehr Wärme abgeführt wird als am abgewandten Thermoelement 10.

Wegen des vollkommen symmetrischen Aufbaus der Sonde ergibt auch jede Strömungsumkehr sofort eine Umkehr des Meßsignals. Der Meßbereich ist in Richtung auf größere Strömungsgeschwindigkeiten begrenzt, da sich bei großen Strömungsgeschwindigkeiten die Temperaturunterschiede zwischen den Thermoelementen 9 und 10 einander wieder angleichen. Bei einer praktisch ausgeführten Meßsonde, die in Wasser eingetaucht ist, liegt die ser obere Grenzwert bei etwa 2,5 m/s; im Gas liegt dieser Grenze noch höher. Das ist aber ein Wert, der bereits im Meßbereich von üblichen Turbosonden liegt.

Die Sonde gemäß Fig. 1 ist insbesondere für horizontale Rohrabschnitte geeignet. Wollte man sie in einem vertikalen Rohrstück verwenden, dann würde man durch das Aufheizen der Heizspirale 3 eine zusätzliche Naturkonvektion erzeugen, die sich der zu messenden Strömung überlagern würde. Für solche vertikalen Rohrstücke eignet sich daher besser eine Sonde, wie sie in Fig. 2 gezeigt ist. Diese Sonde arbeitet nach demselben Meßprinzip, jedoch ist die Wärmeentwicklung aufgrund des Heizleiters weniger konzentriert und damit die durch den Heizleiter erzeugte Konvektionsströmung geringer. Auch hier ist wieder die Sonde in einen Stopfen 13 eingebaut, der in das hier vertikale Rohrstück eingeschraubt werden kann. Der Stopfen trägt anstatt der Heizspirale zwei gestreckte Heizleiter 14 und 15, die senkrecht zur Strömungsrichtung (Pfeil 26) verlaufen und in Strömungsrichtung hintereinander liegen. Als Heizleiter werden hier zwei koaxiale Heizleiter (Thermokoax-Kabel) verwendet, deren jeweilige Hülle 28 bzw. 29 mit dem Stopfen verbunden ist. Die jeweils inneren Drähte 18 und 19 dieser Heizleiter werden getrennt aus dem Stopfen herausgeführt und sind je mit der positiven Klemme einer Gleichspannungsquelle verbunden. Die gemeinsame negative Klemme liegt am Stopfen.

Die eigentlichen Thermoelemente zur Messung der Temperaturdifferenz in Strömungsrichtung sind mit ihren Meßpunkten 20 und 21 an je einem der Hüllrohre 16 und 17 der beiden Heizleiter 14 und 15 in bezüglich der Strömungsrichtung fluchtender Anordnung angelötet. Wegen der gestreckten Konfiguration der Heizleiter 14 und 15 kann die natürliche Konvektion die Messung der Temperaturdifferenz zwischen den Meßpunkten 20 und 21 kaum verfälschen. Abgesehen davon gleicht das Meßprinzip dem der Sonde gemäß Fig. 1, so daß auf die Funktionsweise im ein zelnen nicht näher eingegangen zu werden braucht.

Selbstverständlich ist auch die Sonde gemäß Fig. 2 zum Einsatz in einem horizontalen Rohrabschnitt geeignet, wenngleich die Sonde gemäß Fig. 1 in diesem Fall einen weiteren Meßbereich abdeckt.

Fig. 3 zeigt schließlich eine Variante zur Ausführungsform gemäß Fig. 2 für den Einsatz in horizontalen Rohrabschnitten. Die Variante besteht lediglich darin, daß zusätzlich eine Füllstandsmessung mit über die Länge eines der Heizleiter 14 oder 15 verteilten weiteren Thermoelementen 22, 23, 24 und 25 möglich wird. Diese Thermoelemente sind hier an das Hüllrohr 16 des Heizleiters 14 angelötet und zeigen unterschiedliche Temperaturen an, je nachdem, ob der fragliche Hüllrohrbereich von einer (gut wärmeleitenden) Flüssigkeit oder einem (schlechter wärmeleitenden) Dampf oder Gas umgeben ist. Diese Thermoelemente werden über ein Meßkabel 27 einem nicht dargestellten Konstanttemperatur-Anschlußkasten und von dort einem Multiplexschalter zugeführt, über den ein Meßgerät die einzelnen Thermoelemente nacheinander abfragt und mit der Betriebstemperatur vergleicht. Daraus wird ein Analogsignal des Höhenstandes abgeleitet.

Es ist weiter möglich, ein weiteres Thermoelement am unteren Ende eines der Heizleiter 14 und 15 anzubringen und auf diese Weise die Temperatur der strömenden Flüssigkeit zu messen und zu überwachen.

Im Fall der Fig. 3 ist es konstruktiv günstig, wenn die Zuleitungen zu den Meßpunkten für die Füllstandsmessung durch ein Rohr verlaufen, das im Stopfen verankert ist und die beiden Heizleiter 14 und 15 sowie die Thermoelemente zur Messung der Strömungsrichtung mechanisch trägt.

# EP 0 363 695 B1

## Patentansprüche

1. Meßsonde zur Erfassung niedriger Strömungsgeschwindigkeiten in einem Rohrabschnitt, in den mindestens ein Heizelement (3; 14, 15) hineinragt, wobei zwei Thermoelemente (9, 10, 20, 21) an in einer Richtung parallel zur Achse des Rohrabschnitts hintereinanderliegenden Punkten angebracht und elektrisch so in Reihe geschaltet sind, daß sie die Temperaturdifferenz zwischen diesen Punkten zu messen erlauben, dadurch gekennzeichnet, daß die Thermoelemente (9, 10, 20, 21) am Heizelement selbst so angebracht sind, daß je eines bei jeder Strömungsrichtung unmittelbar angeströmt wird und daß somit die unterschiedlichen Anströmungen des Heizelements für die gemessene Temperaturdifferenz ursächlich sind.

2. Meßsonde nach Anspruch 1, dadurch gekennzeichnet, daß das Heizelement als spiralförmiger Heizleiter (3) mit zur Strömungsrichtung (2) paralleler Spiralachse ausgebildet ist.

3. Meßsonde nach einem der Ansprüche 1 bis 2, dadurch gekennzeichnet, daß das Heizelement (3; 14, 15) symmetrisch gespeist wird, indem beide Enden (5, 6; 18, 19) mit einem im wesentlichen gleichen ersten Potential und ein Mittelabgriff (4) mit einem zweiten Potential verbunden werden.

4. Meßsonde nach Anspruch 3, dadurch gekenzeichnet, daß als Heizelement zwei gerade Heizleiter (14, 15) verwendet werden, die parallel zueinander senkrecht zur Strömungsrichtung (2, 26) verlaufen, wobei der eine in Strömungsrichtung hinter dem anderen angeordnet ist.

5. Meßsonde nach Anspruch 4 für den Einbau in einen horizontalen Rohrabschnitt, dadurch gekennzeichnet, daß außerdem mehrere Thermoelemente (22 bis 25) entlang eines der Heizleiter (14) verteilt an diesem befestigt sind, wobei die gemessenen Temperaturen Auskunft über den Höhenstand der Flüssigkeit entlang dieses Heizleiters geben.

## Claims

1. A measuring probe for detecting low flow velocities in a tube portion, into which projects at least one heater (3; 14, 15), two thermocouples (9, 10, 20, 21) being mounted successively at aligned points along a direction parallel to the axis of the tube portion and being electrically series-connected in such a way that they permit to measure the temperature difference between these points, characterized in that the thermocouples (9, 10, 20, 21) are mounted on the heater itself in such a way that one respectively is directly facing the flow for each flow direction and that thus the differences in the attack of the heater by the flow are the reason for the measured temperature difference.

2. A measuring probe according to claim 1, characterized in that the heater is constituted by a helicoidal heater conductor (3) having a spiral axis parallel to the flow direction (2).

3. A measuring probe according to one of claims 1 to 2, characterized in that the heater (3; 14, 15) is symmetrically power supplied by connecting both ends (5, 6; 18, 19) to an essentially equal first potential and an intermediate pick-up (4) to a second potential.

4. A measuring probe according to claim 3, characterized in that two straight heater conductors (14, 15) are used as heaters, which are parallel to each other and are disposed perpendicularly to the flow direction (2, 26), one being disposed downstream the other in flow direction.

5. A measuring probe according to claim 4 intended for use in a horizontal tube portion, characterized in that moreover several thermocouples are distributed along one of the heater conductors (14), the measured temperatures being indicative of the liquid level along this heater conductor.

## Revendications

1. Capteur pour la détection de faibles vitesses d'un fluide dans un tronçon de tube, dans laquelle projette au moins un élément chauffant (3; 14, 15), deux thermocouples (9, 10, 20, 21) étant disposés à des point alignés en direction parallèle à l'axe du tronçon de tube et étant connectés électriquement en série de telle façon qu'ils permettent de mesurer les différences de température entre ces points, caractérisé par le fait que les thermocouples (9, 10, 20, 21) sont fixés à l'élément chauffant lui-même de telle façon qu'un d'eux respectivement se trouve directement en face dudit fluide pour chaque direction du fluide et que donc les différences d'attaque de cet élément par ledit fluide sont à l'origine de la différence de température mesurée.

2. Capteur selon la revendication 1, caractérisé en ce que l'élément chauffant est une résistance chauffante en hélice (3), l'axe d'hélice étant parallèle à la direction du fluide (2).

3. Capteur selon l'une des revendications 1 à 2, caractérisé en ce que l'élément chauffant (3; 14, 15) est alimenté symétriquement en connectant les deux bouts (5, 6; 18, 19) à un premier potentiel essentiellement identique et une prise intermédiaire (4) à un deuxième potentiel.

4. Capteur selon la revendication 3, caractérisé en ce qu'on utilise en tant qu'élément chauffant deux résistances chauffantes (14, 15) qui sont disposés parallèlement l'un à l'autre et perpendiculairment à la direction du fluide (2, 26), l'un étant disposé derrière l'autre en direction du fluide.

5. Capteur selon la revendication 4 pour le montage dans un tronçon de tube horizontal, caractérisé en ce qu'en outre plusieurs thermocouples (22 à 25) sont fixés le long d'une des résistances chauffantes (14), les températures mesurées donnant des informations sur le niveau du liquide le long de tte résistance chauffante.

FIG. 1

FIG. 2

FIG. 3